# EUROPEAN PATENT APPLICATION

(11) **EP 2 757 592 A1**
(43) Date of publication of application: **23.07.2014**
(21) Application number: 13151979.5
(22) Date of filing: 18.01.2013
(51) Int. Cl.: H01L 31/042, F24J 2/52

(54) **Mounting system for photovoltaic modules and plate-shaped components**

(71) Applicant: Contact Italia srl, 70022 Altamura (BARI) (IT)
(72) Inventor: Maggi, Francesco, 70022 Altamura (BARI) (IT)
(74) Representative: Vinciguerra, Vincenzo

(57) **Abstract**

Photovoltaic module mounting system designed to allow the assembly and installation of the majority of photovoltaic modules (10) and plate-shaped components on any type of roof in order to obtain a waterproof surface that is able to resist weathering. Said mounting system includes a plurality of elongated components (41,50), each designed to receive and support the adjacent sides of two photovoltaic modules (10) in such a way that each panel extends between at least two of said mounting rails and where each of said elongated components is anchored to the support structure by means of special fastening devices that give the system extreme flexibility and ease of assembly.

## Description

### Technical Field

The present invention relates to the field of photovoltaics and, in particular, the field of mounting systems that are designed to fasten and assemble two or more photovoltaic modules in order to obtain larger receiving surfaces.

The invention described hereafter, and each of the components that make it up, while being particularly suitable for the mounting of photovoltaic modules, can also be used with other types of rectangular plates or panels, without regard to the materials out of which said plates or panels are composed.

The purpose of the present invention is to form a mounting system for photovoltaic modules that is designed to allow the assembly and installation of the majority of the photovoltaic modules on the market onto a wide range of roof types, either level or sloped, in order to obtain a waterproof surface that is able to resist weathering.

### Prior Art

Over the years, the ever-growing awareness of the energy balance of buildings has led to an exponential increase in the demand for photovoltaic systems for the production of electrical power in both small and large building interventions.

Such systems are essentially formed by the assembly of several elemental components, that is the photovoltaic modules, in order to form a single receiving surface that is large enough to meet the energy demands of the building, or, if that were not possible, large enough to cover all of the space available. Such systems are usually placed on the roofs of buildings, superimposing or otherwise in place of the finishing elements that make up the roof covering of the building itself.

Therefore, the photovoltaic systems that are able to completely substitute the roof covering, thus having the two-fold function of both generating electrical power and protecting the roof covering, are especially appreciated. These kinds of systems, referred to as integrated systems, have considerable advantages, not just on an economic level, but also on an aesthetic and functional one. An integrated system, because it does not require additional finishing elements (wood, tiles, stone, etc.), allows a considerable quantity of material and number of labour hours to be saved, with great advantages to the costs and the speed of installation. Moreover, in such a photovoltaic system, the photovoltaic modules prove to be better integrated and in harmony with the rest of the construction, thus notably reducing their aesthetic impact.

In order to adequately carry out the dual role of roof covering and electrical energy production system, the single components forming the photovoltaic array need a suitable mounting system that can guarantee at the same time the functioning of the receiving surfaces and a flawless waterproofing and protection of the building. Rainwater, snow, and condensation must be able to easily slide along the surface of the photovoltaic array, without seeping below the panels, and be easily collected and removed from the structure. The photovoltaic array, moreover, must be of quick and easy installation, considering the obvious difficulty and risks of procedures carried out on the roofs of buildings, especially if the roofs are sloped.

Finally, given the large variety of materials and types of roofs present in the field of architecture, it is indispensable that such a mounting system, and thus, as a consequence, the photovoltaic system, be flexible and easily adaptable to any context, both in the case of installation on buildings of new construction and in the case of work on existing structures. A mounting system that is too rigid would increase the number and the complexity of procedures necessary for the installation, thus thwarting the gains, both energetic and economic, made from the adoption of such a system.

The state of the art includes various types of systems designed to allow the formation of large photovoltaic arrays integrated in the roof system beginning from single photovoltaic modules of common production.

The state of the art includes, among others, the system referred to in the patent n. EP1060520, which is made up of a series of mounting rails designed to form a fastening system that frames every single photovoltaic module. The junction between the lateral mounting rails of such frames guarantees the sealing of the vertical joints between the single components while the horizontal joints are eliminated through a partial overlapping of every component with the corresponding component in the row below.

The state of the art also includes the patent n. EP2390597, which concerns a system that includes a pair of mounting rails designed to seal the vertical joints between the panels that form the photovoltaic array. A first mounting rail holds the side edges of the photovoltaic components which are then further fastened by means of a second T-shaped component, also claimed in the same patent, which stabilizes and seals the joint. The mounting rail is placed along the line of greatest slope of the surface to be covered and its shape is such as to permit a specific overlapping of the components belonging to the same column, an overlapping which prevents water from seeping between the joints of the panels.

The state of the art also includes the patent n. EP1734588, which includes a mounting rail/conduit to be positioned in correspondence to the vertical joint between panels, and a system of hangers designed to support the various components. The horizontal joint between the various panels forming the photovoltaic array is eliminated through the partial overlapping of one component in respect to the corresponding component in the row below while the conduit collects and drains the water that seeps between the lateral joints of the panels.

The state of the art also includes the patent n. WO2009095009, which includes a pair of mounting rails - upper/lower - which, attached to the edges of the panel, cause the partial overlapping of the components. A conduit must be placed in correspondence to the vertical joints to collect and remove rainwater.

The state of the art also includes the patent n. US2003070368, which includes particular mounting rails attached to the upper and lower edges of the panels and which allow the jointing of the panels with the consequent elimination of the horizontal joint. A conduit for gathering and draining water is positioned in correspondence to the vertical joints.

The previously mentioned systems for the mounting of photovoltaic modules present a structure or a number of elemental mounting rails which are very rigid and, as a result, incapable of absorbing possible irregularities in the surface to be covered. Hence the need to carry out preliminary preparation work on the surface where the panels will be placed, which would inevitably extend the assembly time and signify an increase in the costs of materials and labour. In addition, in the event that the mounting rails forming the structure are positioned directly on the surface to be covered, there would not be an effective ventilation of the area below the panels. Such (micro) ventilation is absolutely necessary in order to avoid the persistence of moisture and the consequent formation of condensation that would inevitably compromise, in the medium and long-term, the functioning of the system or that would irreparably nullify the effectiveness of the waterproofing.

If the photovoltaic array is installed on the surface of a roof, either existing or of new construction, in the case that both photovoltaic modules and a traditional covering - clay tiles, stone, etc. - are called for, it is considered preferable today to use the same substructure for both types of coverings since such a solution speeds up the assembly phase and helps to curb costs; nevertheless, this technical/constructional stratagem profoundly influences the assembly of the system if the thicknesses of the two types of coverings do not coincide. In the event that the thickness of the panels were greater, a protrusion of the panels in respect to the surface of the roof would result which would compromise the integration of the two from an aesthetic and architectural standpoint. Otherwise, that is, if the thickness of the panels were lesser, negative effects of shading on the photovoltaic modules would result with a consequent loss of performance of the system.

The state of the art also includes the patent n. WO2011066843, which includes particular mounting rails to be attached to the side edges of the panels with the function of allowing the jointing of the panels and the consequent sealing of the vertical joint while the horizontal joints are eliminated through an overlapping effect. Such a system, although allowing numerous adjustments in the assembly phase, proves to be especially rigid in the operational phase. Possible movements of the placement surface, due to normal settlement of the support structure or produced, for example, by unexpected telluric movements, might not be adequately absorbed by the components that support the photovoltaic modules with consequent damage to the panels themselves or to the system of gaskets that guarantee the impermeability of the joints. Moreover, since the photovoltaic components are only supported along the side edges of the structure, said structure allows the use of a limited type of panels, excluding all the components that, because of their size, weight, or structure, prove to be incompatible with such a static scheme.

### Summary of the Invention

The present invention is set forth and characterized in the main claim. Other characteristics of the present invention are described in the secondary claims.

The purpose of the present invention is that of allowing the placing of the majority of photovoltaic modules on flat or sloped roofs, in order to obtain several ample photovoltaic surfaces for the production of electrical power.

A further purpose of the present invention is that of allowing the photovoltaic array, formed by means of the invention described herein, to completely and effectively substitute traditional roof covering components, thus guaranteeing, in addition to the production of electrical power, the protection of the underlying components from atmospheric precipitation.

A further purpose of the present invention is that of guaranteeing a flawless integration of said photovoltaic modules with the roof covering, both existing and of new construction, if the system only occupies a portion of the surface.

Also, the purpose of the present invention is to make said system for the mounting of photovoltaic modules flexible and adaptable to any kind of building solution, while preserving ease and speed of assembly. Thanks to its ability to absorb small imperfections present in the placement surface and possible settlement of the structure, the present invention reduces the possibility of malfunction or assembly errors, thus guaranteeing a flawless functioning of the system without the need for frequent maintenance.

The invention described herein is characterized by a mounting system for the installation of one or more photovoltaic modules on supporting surfaces such as the roofs of buildings or similar surfaces. Said mounting system includes a plurality of mounting rails and fastening components, including dual support anchoring devices, rotational connecting devices, main mounting rails, transverse mounting rails, clasping mounting rails, anti-slip devices, gaskets, and fastening devices.

The main mounting rails and the clasping mounting rails, coupled and locked together with the clasping mounting rail positioned above the main mounting rail, are shaped in such a way as to receive and immobilize the side edges of two different panels in such a way that, in the presence of a plurality of panels and a plurality of pairs of said mounting rails, each panel extends between two of said pairs of mounting rails and is supported by these.

Each of these pairs of mounting rails is secured to the support structure by means of special dual support anchoring devices and the jointing between the main mounting rail and the anchoring device is achieved through the rotational connecting devices.

Said rotational connecting devices can be secured directly onto the support structure without the need for additional components and their height determines the distance from the support structure at which the photovoltaic modules will be located.

In a particular form of embodiment of the present invention, said rotational connecting devices can be hooked onto the structure by means of adjustable spacers that allow the modification, within certain limits, of the distance of the connecting devices from the structure. This can prove especially useful when it is necessary to quickly intervene with small adjustments once the connecting device has been installed.

Said dual support anchoring devices are positioned in correspondence to each point of intersection between the panels in order to simultaneously support the terminal part of a first main mounting rail - and related clasping mounting rail - and the beginning part of a second of said main mounting rails belonging to the following row of panels. Such an innovative component has many advantages, the first being that it allows the anchoring of the panels to the structure at certain points and not through contact of the entire surface of the mounting rails. An anchoring system that attaches at points, unlike those that call for the connection of extensive surfaces, allows the backing up of the irregularities of the support structure, thus allowing the components to warp without compromising their functioning. Moreover, it allows the maximization of surface ventilation and the ventilation of the components below the photovoltaic system, thus preventing condensation from forming and moisture from remaining, both of which would compromise both the functioning of the system and the impermeability of the structure.

Moreover, said dual support anchoring devices include two semicircular housings placed at different heights relative to the base of the anchoring device itself. In each of said housings a rotational connecting device is inserted and it is precisely through this connecting device that the main mounting rail is hooked onto the anchoring device. Such a joint, unlike what occurs in WO2011066843, allows the main mounting rails to have a certain freedom of rotation with the consequent increase in the flexibility of the system. The imperfections and the small settlement movements of the support structure can be easily absorbed and backed up inasmuch as the components are not attached to one another in a rigid way, but are equipped with sufficient freedom of movement with the purpose of allowing them to settle even after the assembly phase.

Moreover, the two semicircular housings of the anchoring devices are designed in such a way as to guide the flawless overlapping of the edges of the panels belonging to two consecutive rows, thus guaranteeing the impermeability of the joint. Moreover, for a further guarantee of the functioning of the joint itself, since the two edges of the panels are constrained to the same anchoring device, their relative position will not be able to change: the rotational connecting device allows the movement of the panels within the bounds necessary to increase the stability of the system but without jeopardizing their functioning.

To prevent possible seepage due to the accumulation of water when the system is mounted on surfaces with a shallow incline, a form of embodiment of the present invention calls for the installation of a particular gasket in the area of connection and overlapping of the modules.

The anchoring devices are also connected to each other longitudinally by transverse mounting rails, which are also installed by means of the rotational connecting devices and are therefore able to rotate around the axis of the semicircular housings of the dual support anchoring devices. Said transverse mounting rails are designed to support the single photovoltaic modules on the upper and lower edges as well. Thus, unlike what occurs in WO2011066843, each panel is supported on all four sides and not just on two: such a characteristic confers wider possibilities of use upon the system, since its employment is possible with photovoltaic modules of considerable side and of reduced thickness as well without the aid of additional mounting rails which would increase the rigidity of the system.

In order to reduce the stresses on the transverse mounting rails, and to give greater support to the panels in the event of static schemes that are especially stressful for the panels, an alternate embodiment of the invention calls for the insertion of additional dual support anchoring devices, of size and shape analogous to the size and shape of the dual support anchoring devices hitherto described, in an intermediate position between the two already present in correspondence to the joints. Such a possibility increases the flexibility of the invention and the adaptability of the invention to any situation without the distinguishing and characteristic elements of the invention being modified, and, above all, without this having significant repercussions to the economy of the system and to the assembly speed.

A particular form of embodiment of the present invention calls for, analogously to what occurs with the transverse mounting rails, the possibility to reduce the stresses on the main mounting rails as well in the event of considerable loads during the employment of the system. Such a reduction occurs through the introduction of one or more clamping bases, which are equipped with an intermediate mounting clamp, which firmly and precisely constrain the mounting member to the support structure, therefore reducing the stresses upon it.

### Brief Description of the Drawings

All of the characteristics of the present invention will be clear from the following description of a preferential form of embodiment of the invention given as a non-restrictive example, with reference to the attached drawings wherein:

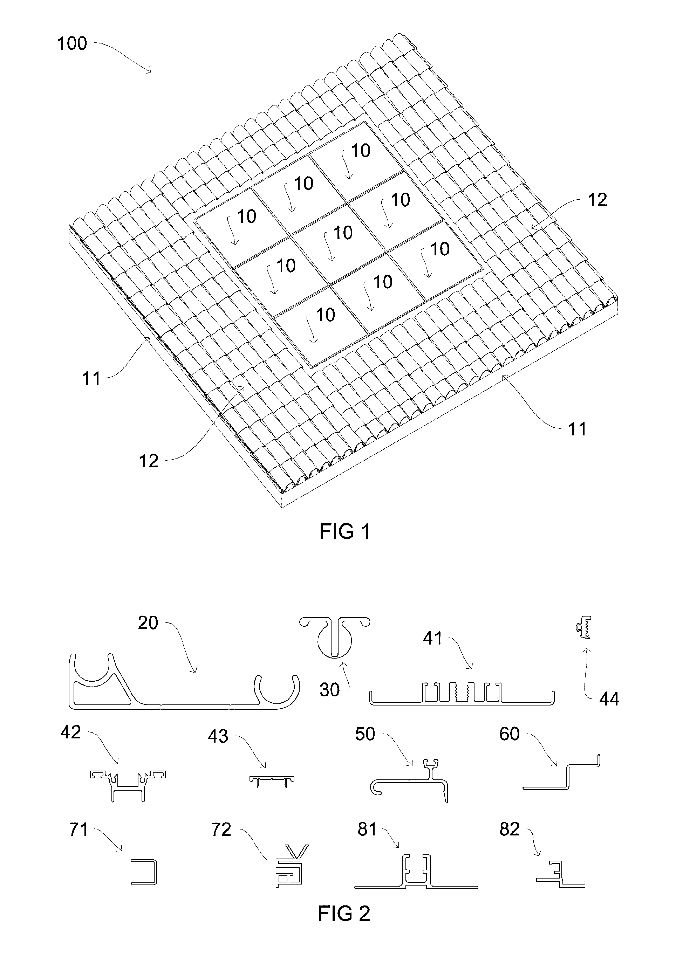

Figure 1 - Perspective view of the photovoltaic array, composed by using the above-mentioned invention, and installed on the surface of a traditional pitched roof;
Figure 2 - Cross sections of the main mounting rails included in the photovoltaic module mounting system (100);

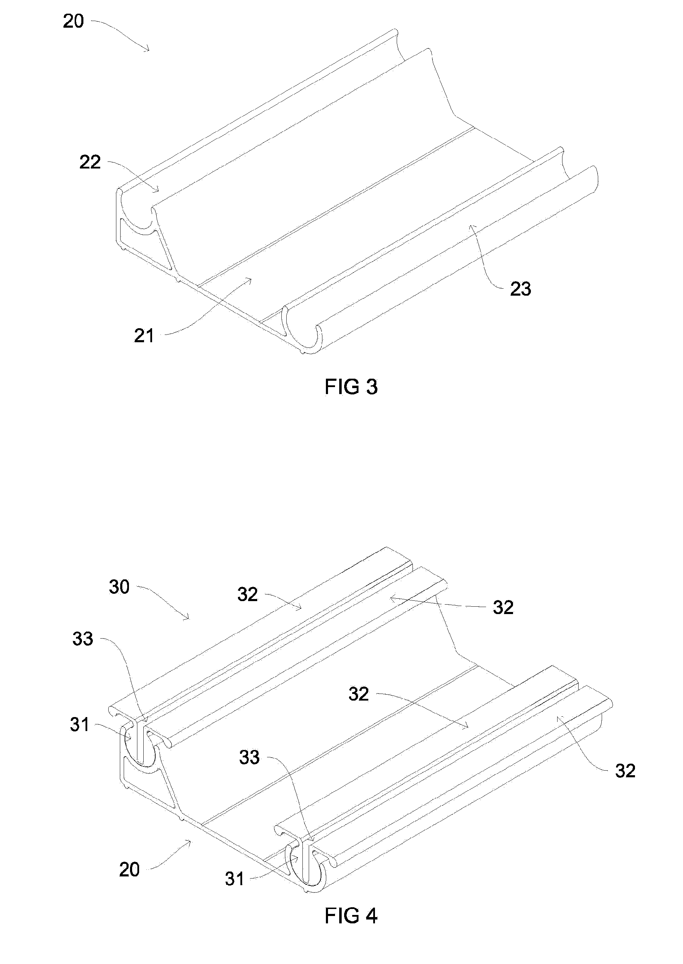

Figure 3 - Axonometric view of a preferential form of embodiment of the dual support anchoring device;
Figure 4 -Axonometric view of a preferential form of embodiment of the rotational connecting devices inserted in the semicircular housings of the dual support anchoring device;

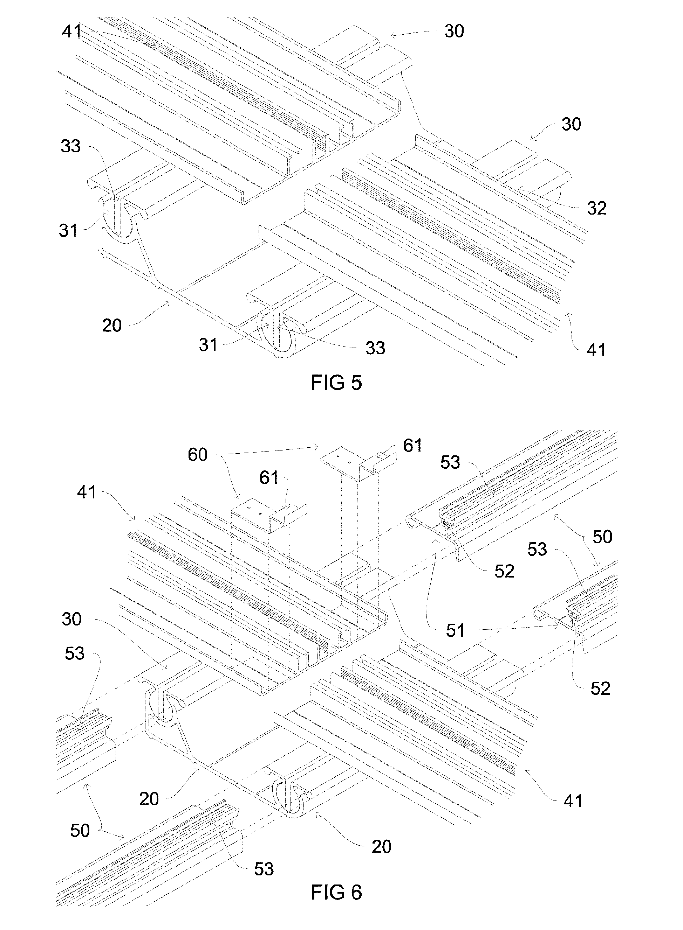

Figure 5 - Axonometric view of a preferential form of embodiment of the invention representing in detail the assembly dynamics of the main mounting rails (41), the rotational connecting devices (30) and the dual support anchoring devices (20);
Figure 6 - Axonometric view of a preferential form of embodiment of the invention representing in detail the assembly dynamics of the main mounting rails (41), the transverse mounting rails (50), the rotational connecting devices (30), the dual support anchoring devices (20) and the anti-slip devices (60);

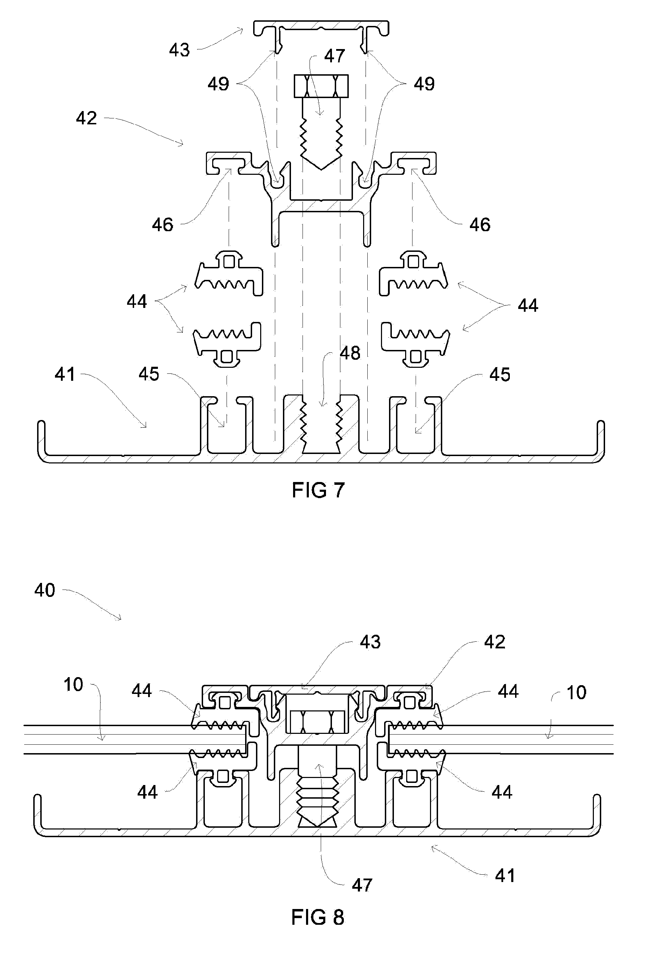

Figure 7 - Mounting scheme of the mounting member (40) formed by the assembly of the main mounting rail (41) with the clasping mounting rail (42) and the covering rail (43);
Figure 8 - Cross section of the mounting member (40) in its final configuration;

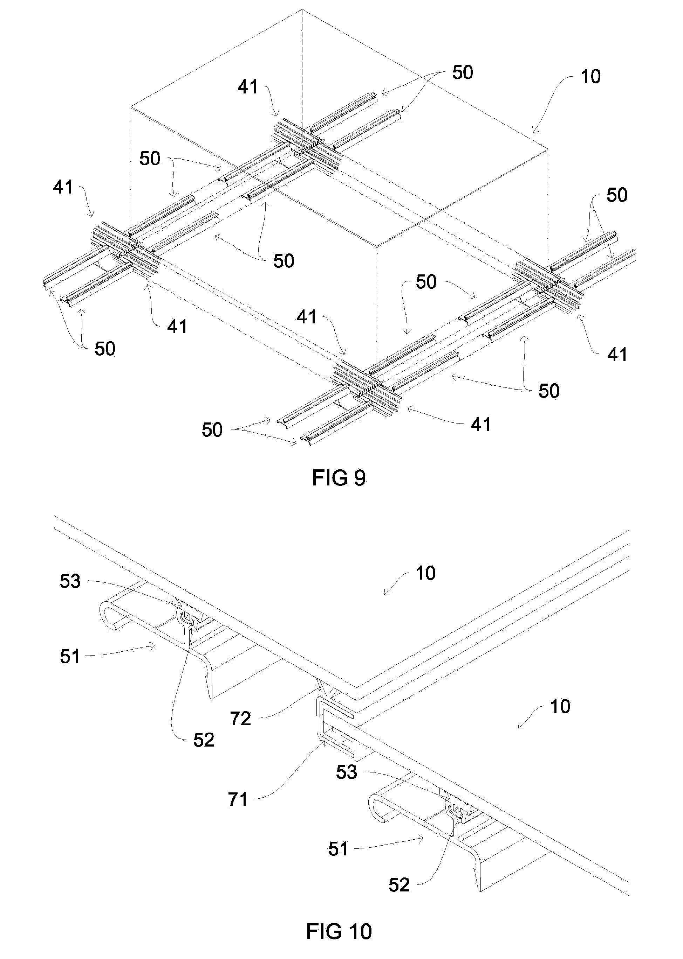

Figure 9 - Three-dimensional view of the assembly phase of the photovoltaic module (10) on the structure made up of mounting members (40), transverse mounting rails (50), rotational connecting devices (30) and dual support anchoring devices (20);
Figure 10 - Three-dimensional view representing the overlapping of the panels (10) belonging to the same column;

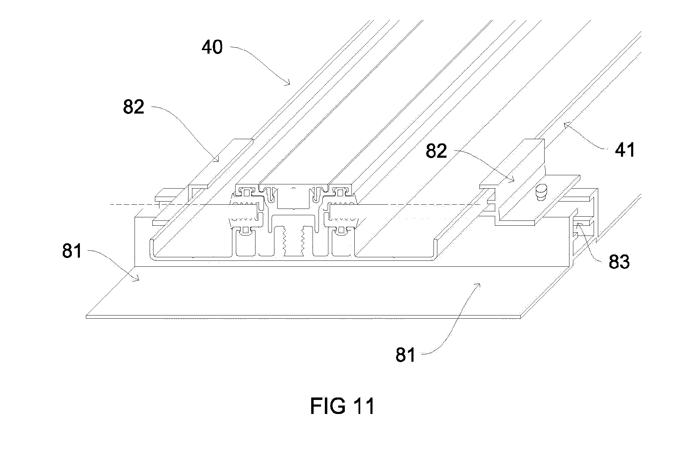

Figure 11 - Three-dimensional view representing the placing and the functioning of the anti-slip devices to be positioned, if necessary, below the mounting members (40);

### Numbering Used in the Drawings

100 - Photovoltaic module mounting and anchoring system;
10 - Photovoltaic module;
11 - Support surface on which the photovoltaic array is installed;
12 - Traditional covering of the pitched roof made up of clay tiles;
20 - Dual support anchoring device;
21 - Nearly-flat part of the dual support anchoring device (20) designed to attach the fastening devices to the structure;
22 - Upper semicircular housing for the connection of the rotational connecting device (30);
23 - Lower semicircular housing for the connection of the rotational connecting device (30);
30 - Rotational connecting device;
31 - Cylindrical part of the rotational connecting device (30) designed to be inserted into one of the semicircular cavities (22, 23) of the dual support anchoring device (20);
32 - Flat part of the rotational connecting device (30) for the insertion of the transverse mounting rail (50);
33 - Groove used for the for the insertion of fastening devices designed to unite the mounting members (40) and transverse rails (50) with the rotational connecting device (30);
40 - Mounting member including a main mounting rail (41), a clasping mounting rail (42), a covering rail (43), gaskets (44) and fastening devices (47);
41 - Main mounting rail;
42 - Clasping mounting rail;
43 - Covering rail;
44 - Gaskets;
45 - Gasket (44) housing on the main mounting rail (41);
46 - Gasket (44) housing on the clasping mounting rail (42);
47 - Fastening device of the main mounting rail (41) with the clasping mounting rail (42);
48 - Threaded housing found on the main mounting rail (41) designed to receive the fastening device (47);
49 - Snap lock of the covering rail onto the clasping mounting rail;
50 - Transverse mounting rail;
51 - C-shaped part of the transverse mounting rail (50) for receiving the flat part (32) of the rotational connecting device (30);
52 - Opening found on the transverse mounting rail (50) for housing the gasket (53);
53 - Gasket of the transverse mounting rail (50);
60 - Anti-slip device;
61 - Part of the anti-slip device (60) designed to receive and support the lower edge of the photovoltaic module (10);
71 -Aluminium mounting rail protecting the gasket (72) of the upper edge of the photovoltaic module (10);
72 - Gasket of the upper edge of the photovoltaic module (10);
81 - Intermediate clamping base;
82 - Mounting clamp;
83 - Groove of the intermediate clamping base;

### Detailed Description of the Invention

A current preferential form of embodiment of the invention will be described hereafter.

The purpose of this patent application will be described in detail for exemplification purposes only since the invention can be realized in any size, even in accordance with different proportions than those indicated.

With reference to the attached drawings, in its preferential form of embodiment, the photovoltaic module mounting system (100) includes nine photovoltaic modules (10) arranged in three rows that are made up of three components each. It is presumed that the group of photovoltaic modules, which form the photovoltaic system, will be installed on the sloped surface (11) of the roof of a common building.

For the purposes of said description, it is presumed that said photovoltaic system will not occupy the whole available surface, but will be integrated with a covering system formed by clay roof tiles (12) placed on a substructure of transverse and longitudinal roofing battens.

It must be moreover specified that, since for the purpose of this illustration of a preferential form of embodiment of the invention reference has been made to the kind of rectangular photovoltaic module made up of a thin glass plate, the fastening system (100) can be used with panels of any kind and size and not necessarily with the function of producing electrical power as in, for example, those with decorative, insulating, covering, or closing functions.

It must be further specified that the photovoltaic module fastening system (100) described herein includes a plurality of components with a long and narrow shape and a uniform cross section onto which the photovoltaic modules are mounted or that, to various extents, allow the assembly of additional components that are essential to the correct functioning of the mounting system itself (100). In the description of the present preferential form of embodiment of the invention, reference will often be made to said elongated components with the term mounting rail, a term with which elongated components themselves are known and identified in the field of construction.

Finally, it is specified that terms such as "upper", "lower", "above", "below", "lateral", "on top of", "underlying" and other similar terms used to identify the various components that make up the invention refer to the photovoltaic system orientated according to the attached drawings. Said orientation concerns the preferential form of use of the invention, but it must be emphasized that other orientations in particular cases of use could be possible.

For the purposes of this description and in regard to the support structure chosen as an example of the surface onto which the system (100) can be installed, the direction coinciding with the line of greatest incline of the pitched roof is identified with the term transverse. It therefore follows that said transverse direction is orthogonal to both to the line of the ridge and to the line of the eaves. On the other hand, a direction parallel to the line of the ridge and to the line of the eaves of the roof and therefore orthogonal to the line of greatest incline of the roof is referred to with the term longitudinal.

In correspondence to each of the points in which the corners of the panels meet, both those within the photovoltaic array and those present along the outer edges, a dual support anchoring device (20) is positioned. Each anchoring device (20) includes a nearly-flat part (21) and two hollow semicircular housings (22, 23) which are identical in size, but positioned at two different heights relative to the flat part (21).

Said flat part (21) of the anchoring device (20) is designed to be placed on the main structure onto which the system (100) is installed and fastened to this by means of fastening devices. Said fastening devices, however, can differ according to the material and to the structure of the surface onto which the anchoring device is installed, without this bringing variations or alterations to the entire mounting system (100).

The hollow semicircular housings (22, 23), on the other hand, are used for the assembly of the other components of the system (100) and their function will be hereafter explained in detail. At this point, however, it must be noted that the overall height of the anchoring device will also be a function of the size of the covering elements present on the roof and with which the photovoltaic system must integrate and relate. As already disclosed in the part concerning the general description of the invention, if the array were mounted at a height that is too low in respect to the other covering elements of the roof, problems with shading could arise which would bring about a reduction of the output of the photovoltaic modules: the highest components present on the roof in certain hours of the day could cast their shadows on the panels, making the photovoltaic cells that fall inside the shadow area ineffective. Moreover, a photovoltaic array that is too low in respect to the rest of the roof could take the form of a basin and could collect a quantity of water that would be difficult to remove. On the contrary, a photovoltaic system that is excessively high would prove to be extraneous to the roof thus thwarting the attempt of aesthetic and architectural integration.

It is therefore important that the height of the dual support anchoring devices (20) be compatible with that of the rest of the roof covering elements (12).

In the case of the example given in this description, it has been presumed that the roof tiles (12) and the photovoltaic array had compatible thicknesses and that, therefore, there was no need of any additional components.

In more complex cases than the one described in this example, it can be presumed that, in an alternative form of embodiment of the invention, the dual support anchoring device (20) would be equipped with a height adjustment device that would make it usable in practically any situation.

Alternatively, in a further form of embodiment of the invention (100), the same dual support anchoring device (20) described herein is not installed directly onto the roof structure, but onto the substructure that supports the covering layer and which, generally, is formed by transverse and longitudinal wooden roofing battens. In this way, a part of the height would be absorbed by said substructure and there would be no need of especially high anchoring devices.

Independently of the total height of the dual support anchoring device (20), it is important that the height difference between the two hollow semicircular housings (22, 23) present on the anchoring device be compatible with the thickness of the panel (10). As will be better described below, said height difference causes the partial overlapping of the panels belonging to the same column, an overlapping that allows the formation of a practically continuous surface and that allows water to slide down to the lowest point of the photovoltaic system without seeping into the joints. A slight difference in height would not allow a correct overlapping of the panels and, on the contrary, too big of a difference would not guarantee the flawless sealing of the joint between the two panels with possible resulting seepage of condensate water or of accumulating water.

Inserted into each of said hollow semicircular housings (22, 23) is a rotational connecting device (30) that has a length equal to that of the dual support anchoring device (20) into which it is inserted. The rotational connecting device (30) is formed by a mounting rail whose cross section includes a cylindrical part (31) of such a size as to be matched to and to be able to be housed in the hollow semicircular housings (22, 23) of the dual support anchoring device (20), and a flat part (32) that, as will be described below, is used for the fastening of the mounting member (40) and of the transverse mounting rails (50). On the flat part (32) of the rotational connecting device (30), a central groove (33) is found which will be used for the insertion of screws or other fastening systems designed to unite said mounting members (40) and transverse mounting rails (50) with the rotational connecting device (30).

The main mounting rails (41) are therefore installed on the rotational connecting devices (30) in a transverse direction by means of metric screws which are fastened in the groove (33) of the connecting device. Each dual support anchoring device (20) simultaneously receives the terminal part of a first mounting member (40) and the beginning part of a second of said mounting members (40) belonging to the following row of panels.

Two gaskets (44), inserted in special housings (45) found on the main mounting rail (41), are installed on each main mounting rail (41), and on said gaskets (44) the edges of the photovoltaic modules (10) will subsequently be placed.

Two anti-slip devices (60), shaped to receive and immobilize the photovoltaic module (10), are installed on the lower edge of each main mounting rail (41). Said devices include an L-shaped support (61) that acts as a seat for the lower edge of the photovoltaic module (10) while at the same time supporting it, thus preventing it from sliding down.

After the main mounting rails (41) have been laid down, the transverse mounting rails (50) are installed on the rotational connecting devices (30). Said transverse mounting rails (50) include a C-shaped part (51), which is specially shaped and sized for receiving the flat part (32) of the rotational connecting device (30), and an opening (52) for housing the gasket (53) which will come in contact with the lower surface of the glass of the photovoltaic module (10).

Therefore the photovoltaic modules are placed, positioned on the gaskets (53) of the transverse mounting rails (50), on the gaskets (44) of the main mounting rails (41) and resting on the support (61) present on the devices (60) installed on the ends of the main mounting rails (41). The photovoltaic modules (10) are immobilized by installing clasping mounting rails (42) onto the main mounting rails (41) and the clasping mounting rails are fastened to the main mounting rails by means of a fastening device (47) that enters into the threaded housing (48) of said main mounting rail (41).

Said clasping mounting rails include two housings (46) in which will be housed two gaskets (44), one for each housing, in a way analogous to what occurs with the main mounting rails. Moreover, when the clasping mounting rail (42) is installed on the main mounting rail (41), the gaskets of the two mounting rails find themselves one in correspondence to the other in a way that, when the two mounting rails are clamped together, the photovoltaic module (10) ends up being held tightly between the two pairs of gaskets (44). The clamping of the two mounting rails occurs by means of clamping devices (47) which are positioned longitudinally, in a central position, on the clasping mounting rail (42) and which are matched to a special threaded housing (48) found on the main mounting rail (41). The cavity containing said fastening components is then closed by means of an additional covering rail (43) that snaps (49) onto the clasping mounting rail (42).

Every photovoltaic module (10), therefore, is in short constrained in its position both on the two side edges by the mounting members (40) and on the lower side by the anti-slip device (60). Furthermore, said photovoltaic module (10) is simultaneously supported, near the upper and lower edges, by the transverse mounting rails. Each point of support is, as has just been described, furnished with special gaskets devised and designed both to prevent possible seepage of water and moisture present on the surface of the panels (10) and to offer functioning gaps that are helpful to the assembly of the various components.

The extremities of the mounting members (40) are kept at two different heights by the dual support anchoring device (20) and this allows the panels (10) positioned on the same column to have a slight overlapping which allows water to slide without obstacles along the surface of the panels themselves and to therefore not seep through the horizontal joints between panels.

As has been previously explained, the height difference of the hollow semicircular housings (22, 23) present on the dual support anchoring devices (20) is such as to guarantee the correct overlapping of the upper and lower edges of the panels (10) that are found in the same column, without this causing shading to occur. To guarantee further impermeability of the joint and to prevent possible seepage, or water accumulation in the case of a shallow incline of the roof, the installation of a special gasket (72), positioned on the upper edge of each module (10), is called for. Said gasket (72) includes, on the lower part, a hollow housing into which the edge of the photovoltaic module (10) is inserted, and on the upper part, two wing-like extensions which are pressed against the anterior edge of the module of the row above. The hollow housing is protected by an aluminium mounting rail (71) which immobilizes it on the edge of the panel.

In the event that the weight or size of the panels leads to excessive stress, it is possible to insert, on the transverse mounting rails, additional dual support anchoring devices, equipped with rotational connecting devices, in any intermediate position between the anchoring devices already positioned. The transverse mounting rail would therefore have not just two but several points of support to the supporting structure, with a consequent reduction of the workload and, as a consequence, a reduction of the operational stress on the transverse mounting rails.

Analogously, the stresses on the mounting members (40) can also be reduced by using adjustment devices which, in a preferential form of embodiment, include an intermediate clamping base (81) and a mounting clamp (82). The intermediate clamping base (81) is positioned below the main mounting rail (41), at the point at which it is desired to insert an additional point of support. Two mounting clamps, one per side, "pinch" the two wings of the main mounting rail (41) and constrain it to said intermediate clamping base (81) by means of a screw, or similar fastening device, which, passing through a hole present on one of the wings of the mounting clamp, is matched to the groove (83) of the intermediate clamping base.

It must be noted that numerous alternative forms of embodiment of said adjustment device are possible, each one particularly suited to each specific instance of application of the present invention. The description of one particular form of embodiment of said device has been provided with the purpose of making its role within the invention clear and of demonstrating the elevated adaptability of the invention itself.

Nevertheless, it goes without saying that modifications or additions can be brought to said adjustment device and, more generally, to the photovoltaic module mounting system (100) described thus far, but said modifications must be consistent with the area of applicability and with the purpose of the present invention. Each and every one of the above-mentioned components can be substituted with others that are functionally equivalent.

## Claims

1. What is claimed is a mounting system for the assembly and installation of one or more photovoltaic modules placed beside one another and including a plurality of elongated components designed to receive and support the adjacent sides of two photovoltaic modules in such a way that each panel extends between at least two of said mounting rails and said mounting system also including a plurality of anchoring devices anchoring the system to the support structure of said elongated components and **characterized in that** each one of said anchoring devices (20) includes a base designed to be driven into the support structure (21) and two support elements (22, 23) designed to receive - so that it could also rotate in the support element- a connecting and fastening component (30) designed to receive and constrain said elongated components to the anchoring device (20).

2. Mounting system for the assembly and installation of one or more photovoltaic modules according to claim 1, **characterized in that** each one of said anchoring devices (20) simultaneously supports one end of two different said elongated components.

3. Mounting system for the assembly and installation of one or more photovoltaic modules according to claim 1 or 2, **characterized in that** each one of said support elements (22, 23) of the anchoring device (20) is located at a different distance from the support structure on which the mounting system is fixed.

4. Mounting system for the assembly and installation of one or more photovoltaic modules according to claim 1, 2 or 3, **characterized in that** at least one of the support elements of said anchoring devices is equipped with an adjustable spacer designed to modify the distance relative to the support structure on which the mounting system is fixed.

5. Mounting system for the assembly and installation of one or more photovoltaic modules according to claim 1, 2, 3 or 4, **characterized in that** said system includes a component (50), constrained to two of said fastening components (30) and free to rotate with them, designed to support the photovoltaic modules.

6. Mounting system for the assembly and installation of one or more photovoltaic modules according to claim 1, 2, 3, 4 or 5, **characterized in that** said frame can be utilized for the assembly and installation of components with a function or with materials that are different from those typical of photovoltaic modules.

## Amended claims

### Amended claims in accordance with Rule 137(2) EPC.

**1.** What is claimed is a mounting system (100) for the assembly and installation of one or more photovoltaic modules (10) including a plurality of elongated components (40) designed to receive and support the adjacent sides of two photovoltaic modules (10) in such a way that each panel extends between at last two of said elongated components (40) and said mounting system (100) also including a plurality of anchoring devices (20) designed to anchor each of said elongated components (40) to the support structure,
**characterized in that**
each anchoring device (20) includes at least two support elements (22, 23) that are each designed to receive one end of two different said elongated components (40) in a way that the elongated components can also rotate in the support elements (22, 23), and that said support elements (22, 23) belonging to the same anchoring device (20) are configured in such a way as to allow a particular overlapping of the elongated components (40), and in consequence of the photovoltaic modules (10) that they support, in such a way that there is no contact between said elongated components (40) or said photovoltaic modules (10);

**2.** Mounting system (100) for the assembly and installation of one or more photovoltaic modules (10) according to claim 1, **characterized in that**
each photovoltaic module (10) is also supported on the sides that are not supported by the elongated components (40) by means of additional mounting rails (50) connected to the support elements (22, 23) in such a way that said additional mounting rails (50) can also rotate.

**3.** Mounting system (100) for the assembly and installation of one or more photovoltaic modules (10) according to claim 1 or claim 2,
**characterized in that**
each support element (22, 23) allows the fastening and rotation of the elongated components (40) and of the mounting rails (50) by means of the same connecting device (30);

**4.** Mounting system (100) for the assembly and installation of one or more photovoltaic modules (10) according to claim 1 or claim 2 or claim 3, **characterized in that** at least one of the support elements (22,23) of said anchoring devices (30) is equipped with an adjustable spacer designed to modify the distance relative to the support structure on which the mounting system is fixed;

**5.** Mounting system (100) for the assembly and installation of one or more photovoltaic modules (10) according to claim 1 or claim 2 or claim 3 or claim 4, **characterized in that** said frame mounting system (100) can be utilized for the assembly and installation of components panels with a function or with materials that are different from those typical of photovoltaic modules;
